# EUROPEAN PATENT SPECIFICATION

(11) **EP 2 909 920 B1**
(45) Date of publication and mention of the grant of the patent: **30.03.2022**
(21) Application number: 13817726.6
(22) Date of filing: 15.10.2013
(51) Int. Cl.: H02K 1/08, H02K 1/14, H02K 3/52, H02K 15/02

(54) **A STATOR OR ROTOR**
STATOR ODER ROTOR
STATOR OU ROTOR

(30) Priority: 17.10.2012 GB 201218669
(43) Date of publication of application: 26.08.2015
(73) Proprietor: Protean Electric Limited, Farnham, Surrey GU10 5EH (GB)
(72) Inventor: BELL, Jamie, Farnham Surrey Hampshire GU10 5EH (GB); FOULSHAM, John, Farnham Surrey Hampshire GU10 5EH (GB)
(74) Representative: Harrison IP Limited
(86) International application number: PCT/IB2013/059371
(87) International publication number: WO 2014/060950

(56) References cited:
- WO-A1-2008/099661
- WO-A2-2011/095945
- JP-A- 2003 180 044
- JP-U- S5 721 234
- US-A1- 2004 130 229

## Description

The present invention relates to a stator or rotor, and in particular a stator or rotor for an in-wheel electric motor or generator.

Stators are well known as the stationary part of an electric motor or electric generator about which a rotor turns. Stators generally comprise a magnetic component and other structural components. Electric motors work on the principle that a current carrying wire will experience a force in the presence of a magnetic field. Typically a rotor, carrying a set of permanent magnets, is arranged to rotate about a set of coils that are arranged to carry an electric current, resulting in the rotor rotating about the stator and generating movement. It will be appreciated that it is also possible for the rotor to carry a set of coils and the stator to carry a set of permanent magnets.

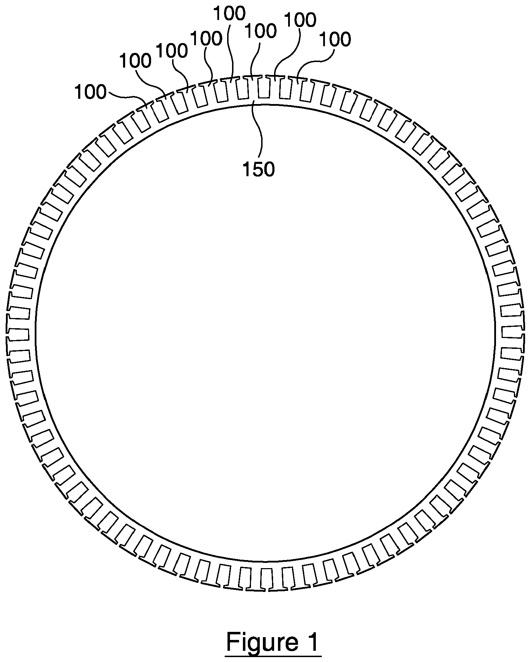

An example of a stator, which is arranged to be mounted within a rotor, is shown in Figure 1. Figure 1 shows the back-iron of a stator formed of a single piece of material, for example from PM (powder metal) or more commonly built up of a number of identical laminations. The protrusions 100 from the circular support 150 (also known as a back iron or back ring) are known as "teeth" and are used to receive a plurality of coil windings. To increase performance of a motor it is desirable to optimise the total cross-section of the coil windings, which would have the effect of reducing resistance, thereby reducing heat generation. Additionally, with the coil windings being in closer proximity, this would have the effect of improving thermal conductivity, which would have the effect of increasing motor efficiency with improving continuous performance.

However, with an arrangement such as that shown in Figure 1, where the entire stator is formed of a single solid piece, it will be appreciated that there is a limited amount of space to physically wind the wire coils about the teeth. Therefore, it is common in such arrangements for there to be gaps between the coils of adjacent teeth, which is inefficient since this space could otherwise be filled with wire coils to increase the total cross-section of the coil windings.

Additionally, traditional ways of providing coil insulation between a stator and coil windings can result in poor thermal conductivity, which can limit the performance of an electric motor.

JP S57 21234 and JP 2003 180044A describe mechanisms for retaining a stator tooth to a stator backiron.

WO2011/095945 describes a stator with radially mounted teeth.

WO2008/099661 describes a stator core having teeth portions formed by layering teeth portion electromagnetic steel plates arranged in a radial pattern outside the yoke portion.

US2004/0130229 describes an electric machine having an inner and outer motor.

Further, large single piece stators typically require a complex winding machine and complex winding process to perform the required coil windings.

Accordingly, it is desirable to improve this situation.

In accordance with an aspect of the present invention there is provided a stator or rotor and a method according to the accompanying claims.

The invention provides the advantage of allowing individual stator teeth to be individually wound prior to being mounted to the stator back-iron, thereby allowing the space between coils on adjacent stator teeth to be minimised.

Further, radially mounting a stator tooth to a stator back-ring with potting material being used as a retaining feature for retaining the stator tooth to the stator back-iron provides the further advantage of reducing manufacturing complexity and weight of stator teeth and the stator backiron.

Additionally, by having a stator tooth that is mountable to a stator back-iron allows an insulation layer to be over moulded to the stator tooth prior to the mounting process. The use of an over moulding layer applied to single stator tooth can minimise the risk of any air gaps forming between the insulation layer and the stator tooth, thereby providing an electrical insulation layer between the coils and the stator while also improving thermal conductivity.

The present invention will now be described, by way of example, with reference to the accompanying drawings, in which:
Figure 1 illustrates a prior art example of a stator formed as a single piece with integral teeth;
Figures 2, 2a, 2b illustrates a stator circumferential support according to an embodiment of the present invention;
Figure 3 illustrates a stator tooth according to an embodiment of the present invention;
Figure 4 illustrates a stator tooth mounted to a stator back-iron in accordance with an embodiment of the present invention;
Figure 5 illustrates the over-moulding of a stator tooth according to an embodiment of the present invention.

Although embodiments of the invention will now be described in relation to a stator for an electric motor, it should be appreciated that the invention applies equally to rotor arrangements in the instance of electric motors in which the rotor carries the coils. The invention also applies equally to electric generators. Although the present embodiment describes an electric motor having a stator and rotor, where the stator and rotor have a circumferential support, the invention is equally applicable to electric motors having stators and rotors with a different configuration, for example a linear electric motor. Accordingly, the term rotor is intended to cover the moving component of an electric motor irrespective of the shape of that component and as such is intended to cover a forcer in a linear electric motor.

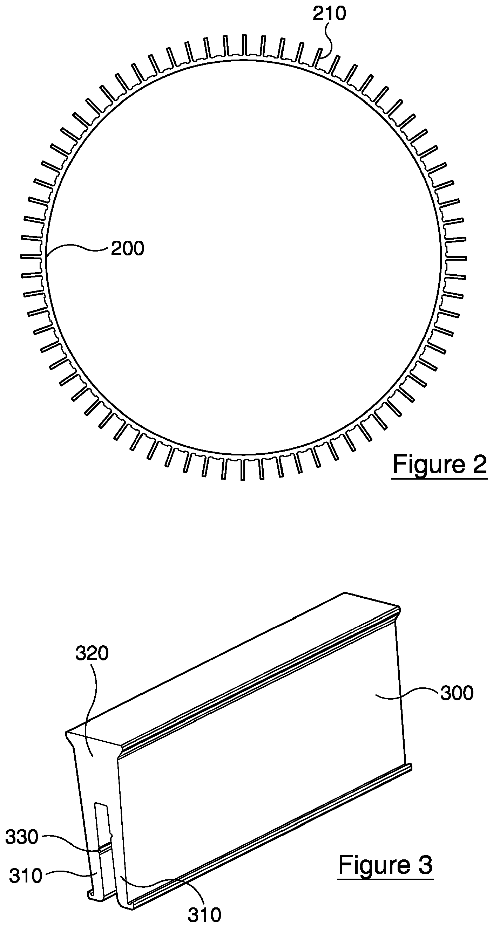

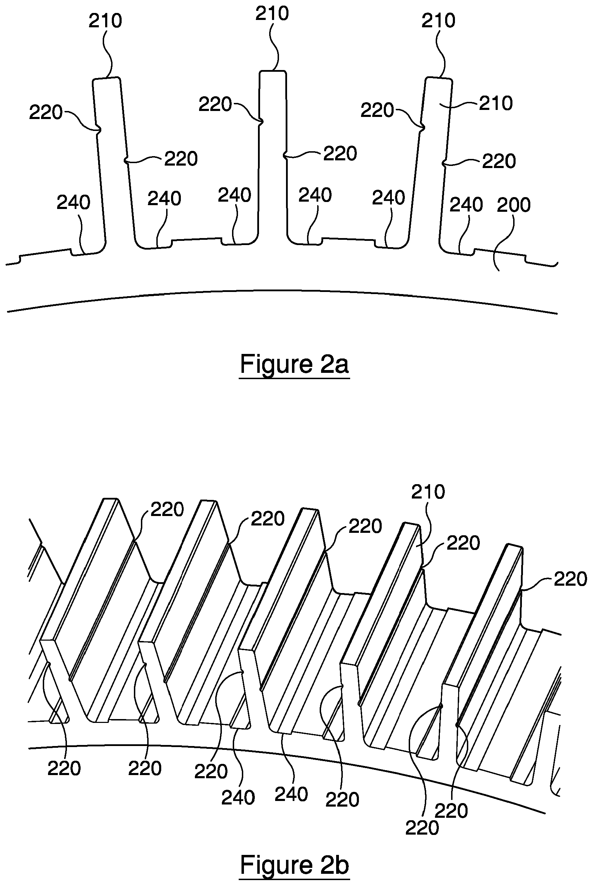

In accordance with a first embodiment of the invention, Figure 2 illustrates a circumferential support 200. Distributed about the outer circumference of the circumferential support 200, that is to say stator back-ring, are a plurality of protrusions 210 that extend in a radial direction, which are illustrated in greater detail in Figures 2a and 2b. The plurality of protrusions 210 extend outwardly away from the outer surface of the stator backiron 200. However, in a different electric motor configuration the plurality of protrusions 210 can extend inwardly from the inner surface of the stator back-iron.

The stator back-iron 200, including the protrusions 210, are formed as a single piece, integral, structural component. For example the stator back-iron 200 can be moulded from powder metal, or more commonly, built up of a number of identical laminations, where the laminations will typically be manufactured from sheets of steel, such as electrical steel, however any material with appropriate strength and electromagnetic properties can be used. The laminations may also have an insulating coating on the surface and along the curved interface shape between teeth stacks and stator back-ring (i.e. circumferential support 200) to prevent eddy currents from flowing between the laminations.

The laminations can be produced by any suitable means, for example stamping or cutting the desired shape from a sheet of the required material or laser etching. As an example, the laminations may have a thickness of between 0.3 and 0.4mm and preferably around 0.35mm.

Each of the protrusions 210 formed on the stator back-iron 200 are arranged to receive a stator tooth, where each of the protrusions are arranged to be housed in a recess formed in a stator tooth, as described below.

As illustrated in Figures 2a and 2b, on the sides of the protrusion 210 that lie in a plane perpendicular to the tangent of the circumferential support there is formed a channel 220 that extends substantially parallel to the base of the protrusion, that is to say in a substantially orthogonal direction to the circumferential plane of the stator back-iron 200. The use of the term channel is intended to cover groove or any form of cavity that allows a material to be inserted.

Although the present embodiment illustrates a channel 220 formed on two sides of the protrusion 210, the present invention is equally applicable to a single channel 220 formed on one side of the protrusion 210.

As illustrated in Figure 2b, both channels 220 formed on the sides of the protrusion 210 extend the whole length of the protrusion 210. However the length of the channels 220 may be shortened, thereby only extending a portion of the length of the protrusion 210 that runs parallel to the base of the protrusion 210.

Further, the orientation of the channels 220 is not limited to running substantially parallel to the base of the protrusion 210 and other orientations may be used.

To minimise the risk of a stress point occurring on the protrusion 210 the channels 220 on each side of the protrusion 210 are offset with respect to one another, thereby ensuring that the width of the protrusion 210 at any point is not reduced by anything greater than the depth of a single channel 220.

Preferably, at the base of a protrusion 210, and on each side, is formed a groove 240 (i.e. a recess), where the groove 240 runs along the stator back-iron 200 at the base of the protrusion 210 in substantially an orthogonal direction to the circumferential plane of the stator backiron 200. Each groove 240 formed in the stator back-iron 200 is arranged to receive an end portion of a stator tooth wall section, as described below.

Figure 3 illustrates a stator tooth 300 for mounting to the stator back-iron 200 illustrated in Figure 2. The stator tooth 300 includes two wall sections 310 that are coupled together via a stator tooth top portion 320. To aid the retention of coil windings mounted on the stator tooth 300, the top portion 320 of the stator tooth extends laterally over the tooth wall sections 310 to form a laterally extending stator tip.

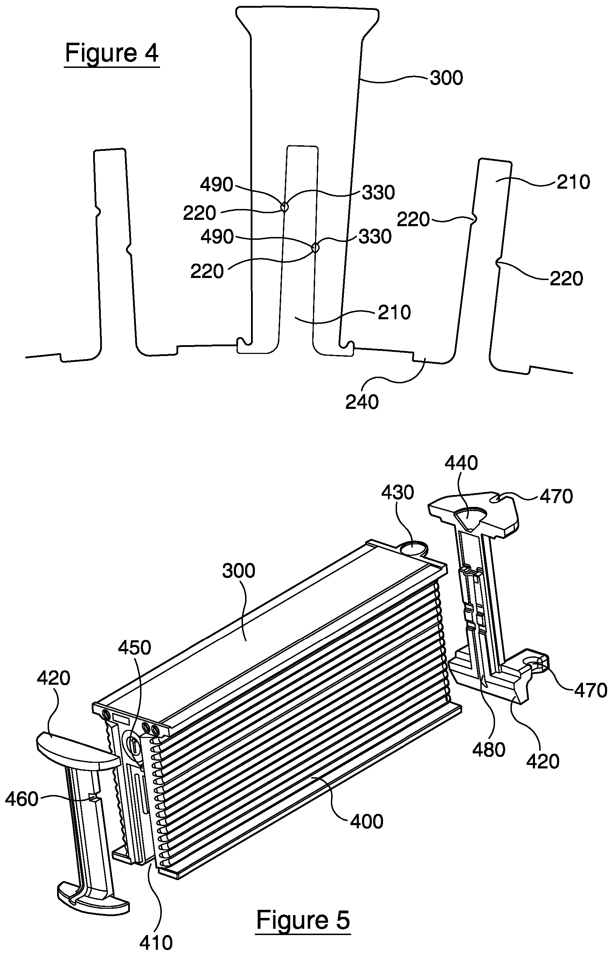

A recess is formed between the two tooth wall sections 310 of the stator tooth 300. The recess is sized to allow a stator back-iron protrusion to be housed within the recess when the stator tooth 300 is placed over the protrusion 210, as illustrated in Figure 4. Preferably, for improved thermal conductivity between the stator tooth 300 and the protrusion 210 the dimensions of the recess and the protrusions 210 are chosen to that any gaps between the walls of the stator tooth recess and the sides of the outer portion of the protrusion are minimised.

Additionally, the bottom portions of the two tooth wall sections are arranged to extend laterally and have corresponding dimensions to the grooves 240 that runs along the stator back-iron 200 at the base of a protrusion 210 so that the laterally extended bottom portions of the two tooth wall sections 310 fit within the grooves 240 on the stator back-iron 200 when the stator back-iron protrusion 210 is housed within the stator tooth recess.

On each of the inner walls of the tooth wall sections 310 there is formed a channel 330. Both channels 330 formed on the stator tooth recess are arranged to align with a corresponding channel 220 on a stator back-iron protrusion 210 once the stator tooth 300 has been placed over the stator back-iron protrusion 210.

As with the channels formed on the stator back-iron protrusions 210 both stator tooth recess channels 330 extend the whole length of a respective wall section 310, however the length of the stator tooth recess channels 330 may be shortened, thereby only extending a portion of the length of a tooth recess wall section 210.

Further, the orientation of the channels 330 is not limited to running substantially parallel to the base of the tooth 300 and other orientations may be used that correspond with the orientation of the channels 220 formed on the protrusion 210.

As the stator teeth 300 are separate from the stator backiron 200 they can be pre-wound with coil windings before the stator teeth 300 are mounted to the stator back-iron 200 with the advantage that the winding of coils on the teeth is easier than if the teeth were integral to the stator support. For example, the slot fill (i.e. the amount of copper wire that fills the slots between stator teeth) for conventional electric motor designs will be of the order of 37%. However, by allow winding of coils to be applied to a stator tooth without the space constraints imposed when the stator is formed as a single piece with integral teeth the slot fill can be increase to approximately 54% or more.

Preferably, prior to the mounting of a stator tooth 300 to the stator back-iron 200 an adhesive is applied to one or more surfaces on the stator tooth 300 and/or a protrusion 210, which abut when the stator tooth 300 is mounted to the protrusion 210. The application of an adhesive to one or more surfaces of the stator tooth 300 and/or protrusion 210 helps to retain the stator tooth to the stator back-iron prior to the application of potting material, as described below. Additionally, the application of an adhesive to one or more surfaces of the stator tooth 300 and/or protrusion 210 also helps to minimise micro- movement of the stator tooth 300 and local vibration of the tooth 300 relative to the stator back-iron 200. To aid thermal conductivity between the stator tooth 300 and the stator back-iron 200 the adhesive is preferably selected to have a good thermal conductivity. The adhesive can also help to electrically isolate the stator tooth 300 from the protrusion 210, thereby helping to minimise eddy currents between stator tooth 300 and the stator back-iron 200.

To mount the stator teeth 300 to the stator back-iron 200 the stator teeth 300 are radially pressed onto a respective protrusion 210 formed on the stator back-iron 200 and a material is inserted between the channels 220, 330 formed on adjacent surfaces of the recess wall sections 310 and the protrusion 210. Preferably, the material is a fluid that is arranged to harden once the material has been inserted between the channels 220, 330 formed on adjacent surfaces of the recess wall sections 310 and the protrusion 210, for example as part of a curing process such as a polymer material arranged to harden by cross-linking of polymer chains brought about by chemical additives, ultraviolet radiation, electron bean or heat. Other examples of suitable material include a polyurethane potting material, or a silicone potting material.

One example of a suitable material would be an epoxy polymer material where the ratio/weight of resin and curing agent, otherwise known as a hardening agent, are selected and blended together prior to the material being inserted between the channels 220, 330 formed on the adjacent surfaces of the recess wall sections 310 and the protrusion 210. The blended compound is then inserted between the channels 220, 330 formed on the adjacent surfaces of the recess wall sections 310 and the protrusion 210. To improve the flow of the material into the channels 220, 330 formed between the recess wall sections 310 and the protrusions 210 warming of the material and/or the stator assembly can be performed.

Once the material has hardened, the hardened material acts as a retention pin 490 that locks the stator tooth 300 to the stator back-iron 200, where the increased shear strength of the hardened material inhibits the radial movement of the stator tooth 300 relative to the stator back-iron 200. As illustrated in Figure 4, the hardened material extends into the channel 220 formed on the protrusion 210 and the channel 330 formed on the recess wall section 310, thereby preventing the stator tooth 300 from being removed from the protrusion with the hardened material acting as an interlocking element.

Although the preferred embodiment uses a fluid, arranged to harden as part of a curing process, as a retention pin 490 for interlocking a stator tooth 300 to the stator back-iron 200 other materials may be used, for example solid elements that are inserted between the channels 220, 330 formed on the adjacent surfaces of the recess wall sections 310 and the protrusion 210.

However, the use of a fluid that hardens after being inserted into the channels formed on the protrusion 210 and the recess wall sections 310 has the advantage of allowing the retaining element to be relatively easily injected into the channels after the stator tooth, with coil windings mounted to the stator tooth, has been mounted over a protrusion.

Figure 5 illustrates a further preferred feature, to aid electrically isolation between the coil windings and the stator tooth 300 the stator tooth 300 is encapsulated with an insulating material 500 using over-moulding (i.e. the stator tooth is over-moulded). Preferably the insulating material 400 will be a plastics material having a good thermal conductivity, high temperature deflection and good dielectric strength, for example liquid crystal polymer. Preferably the over-moulded material is selected to have good thermal conductive properties, thereby aiding thermal conductivity between the coil windings and the stator tooth 300. Preferably, the over-moulding process will include features that aid the retention of the coil windings on the stator tooth, for example a ridge formed at the bottom of the over-moulding.

As illustrated in Figure 5, to facilitate the insertion of material between the channels 220, 330 formed on the adjacent surfaces of the recess wall sections 310 and the protrusion 210 a gap 410 is formed in the injection moulded plastics layer 400 on the two end sides of the tooth 300, where the gap 410 in the injection moulded plastics layer 400 extends from the bottom of the tooth 300 to the top of the recess. The injection moulded plastics layer 400 extends up from the bottom of the tooth 300 to the top of the laterally extending stator tip.

The forming of a gap in the injection moulded plastics layer 400 on the end sides of the tooth 300 has the additional advantage of minimising the inward pressure on the two wall sections 310 of the tooth when the injection moulded plastics layer 400 is being applied to the tooth 300. This avoids the need for structural supports to be placed between the two wall sections 310 for preventing the stator tooth wall sections 310 bending during the injection moulding process. As illustrated in Figure 5, preferably the gap 410 in the injection moulded plastics layer 400 on the end sides of the tooth 300 extends to the top of the tooth recess.

As illustrated in Figure 5, the injection moulded plastics layer 400 formed around the sides of the stator tooth 300 includes longitudinal ridges to facilitate winding the coil windings around the tooth 300 and to increase the contact surface area between the injection moulded plastics layer 400 and the coil windings for improved thermal conduction between the coil windings and the injection moulded plastics layer 400.

To aid electrical isolation between the coil windings and the stator tooth 300 at the end sections of the stator tooth 300, an electrically insulating element 420 is placed in the gaps 410 formed in the injection moulded plastics layer 400 before the coil windings are applied to the stator tooth 300. The electrically insulating elements 420 are arranged to electrically insulate the end sections of the tooth 300 from the coil windings wound around the tooth 300.

Although the preferred embodiment uses two insulating elements 420 placed in two gaps 410 formed on opposite sides of the injection moulded plastics layer 400, the injection moulded plastics layer 400 can be applied with a single gap 410 formed in the injection moulded plastics layer 400 at one end side of the tooth 300 with a single insulating element 420 being used to provide insulation at the end section of the tooth 300.

Preferably, the two insulation elements 420 have keying features that are arranged to match corresponding features formed in the injection moulded plastics layer 400 for facilitating the correct placement of the two insulation elements 420 in the respective gaps 410 formed in the injection moulded plastics layer 400. For the purposes of the present embodiment, an extended lip 430 is formed at the top of the injection moulded plastics layer 400 at one end of the stator tooth 300, with a corresponding recess 440 formed in the associated insulation element 420. On the other end of the stator tooth 300, a keying element 450 is formed on the edge of the injection moulded plastics layer 400 two thirds of the way up from the bottom of the stator tooth 300 with a corresponding recess 460 formed in the associated insulation element 420. However, any form of keying feature may be used.

Preferably, at least one of the insulation elements 420 have a channel 480 formed on an inner surface of the insulation elements 420 for allowing the material, for example potting or adhesive material, to be channelled between the channels 220, 330 formed on the adjacent surfaces of the recess wall sections 310 and the protrusion 210 when the insulation elements 420 are placed in the gaps formed in the injection moulded plastics layer 400 and the associated tooth 300 has been mounted to the stator back-iron 200.

By having a channel 480 formed on an inner surface of an insulation element 420 it is possible for material to be applied up through the channel and between the channels 220, 330 formed on the adjacent surfaces of the recess wall sections 310 and the protrusion 210 surfaces of the stator tooth recess and the stator back-iron after the stator tooth 300 has been mounted to the stator back-iron, where as stated above the potting material is used to retain the stator tooth 300 to the stator back-iron 200.

As stated above, to aid thermal conductivity between the stator tooth 300 and the stator back-iron 200 the adhesive/potting material is preferably selected to have a good thermal conductivity. The adhesive/potting material can also help to electrically isolate the stator tooth 300 from the protrusion 210, thereby helping to minimise eddy currents between stator tooth 300 and the stator back-iron 200.

Preferably at least one of insulation elements 420 includes at least one guiding feature 470 for aiding in the routing of a portion of the coil windings. A first guiding element 470 is provided at the top of the insulation element 420 for routing coil windings to/from a stator tooth 300 with two guiding elements 470 provided at the bottom of the insulation element 420 for routing coil windings between stator teeth 300.

Preferably, the injection moulded plastics layer 400 and the first and/or second insulation elements 420 are made of different materials.

Preferably the over-moulded material is selected to have good thermal conductive properties, thereby aiding thermal conductivity between the coil windings and the stator tooth 300. However, an over-moulded material selected for its optimum thermal conductive properties may not provide the optimum mechanical strength requirements required for guiding/routing portions of the coil windings. Accordingly, by having insulation elements 420 located at the end sides of the stator teeth 300 that do not form part of the injection moulded plastics layer 400 it is possible to select different materials for the insulation elements 420 and the injection moulded plastics layer 400 based on different priorities. For example, the material for the insulation elements 420 can be selected for optimum strength with the material for the injection moulded plastics layer 400 being selected for optimum thermal conductivity. As such, the injection moulded plastics layer 400 may have a higher thermal conductivity than the insulation elements 420 with the insulation elements 420 having great mechanical strength than the injection moulded plastics layer 400. An example of a suitable injection moulded plastics layer would be CoolPoly ^{®} Thermally Conductive Liquid Crystalline Polymer. An example of a suitable material for the insulation elements would be Nylon PA66.

Preferably at least one side of the tooth 300 includes a retaining feature 610 over which the injection moulded plastics layer is formed for preventing the injection moulded plastics layer 400 from peeling away from the side of the tooth 300.

Once the stator tooth 300 has been over-moulded and the insulating elements 420 have been placed in the gaps 410 formed in the end sides of the over-moulding, coil windings are applied to the stator tooth 300. The stator tooth 300 is then placed over a protrusion 210 and material is applied through the insulation element channel into the channels 220, 330 formed on the adjacent surfaces of the recess wall sections 310 and the protrusion 210 for retaining the stator tooth 300 to the stator back-iron 200.

For the purposes of the present embodiment, a fully assembled stator includes 72 stator teeth, however any number of teeth can be used, where preferably the number is between 50 and 100.

It will be appreciated that whilst the invention as shown in the figures and substantially as described relates to an arrangement in which the rotor surrounds a stator and rotates around it, it is fully within the scope of the current invention for the stator to surround the rotor with the winding teeth protruding radially inwards towards the centre of the stator rather than radially outwards.

Also, whilst the invention has been described in relation to stators for electric motors, the invention is equally applicable to elements of an electric generator.

Although stators embodying the present invention can be of any size, preferred sizes will depend upon the desired size of the electric motor or generator. For example, for an electric motor having an 18" diameter, the outside radius of the stator may be around 191 mm (i.e. that stator diameter is 382 mm). For a 20" diameter motor the outside diameter of the stator may be around 424 mm and for a 14" diameter motor the outside diameter may be around 339 mm.

A stator constructed according to the above embodiment finds particular utility in electric motors for electric vehicles. In particular, embodiments of the invention may be incorporated into road going electric vehicles and more specifically electric vehicles having one or more in-wheel electric motors.

## Claims

1. A stator or rotor for an electric motor or generator comprising a circumferential support (200) : forming a stator or rotor back-ring having a plurality of protrusions (210) that extend in a radial direction, and further extend along a direction being substantially orthogonal to the circumferential plane of the stator back-iron (200); a tooth (300) arranged to receive coil windings, wherein the tooth includes a recess in which is housed the protrusion (210) of the circumferential support, wherein the protrusion and the recess in the tooth are arranged to have a cavity or channel (220, 330) formed on an adjacent surface of the recess and the protrusion when the protrusion is housed in the recess, and a material (490) is placed inside the cavities or channels formed by the adjacent surfaces of the recess and the protrusion for retaining the tooth to the support; wherein the tooth is over-moulded prior to receiving coil windings, wherein the over-moulded layer is an injection moulded plastics layer (400) formed on a plurality of sides of the tooth with a first gap (410) formed in the injection moulded plastics layer on a first side of the tooth with a first insulation element (420) placed in the first gap formed in the injection moulded plastics layer, wherein the injection moulded plastics layer and first insulation element are arranged to electrically insulate the tooth from the coil windings, wherein the first insulation element has a channel (460) formed on a surface of the first insulation elements for allowing the material to be channelled between the channels (220, 330) formed on the adjacent surfaces of the recess wall sections (310) and the protrusion (210) when the insulation elements (420) are placed in the gaps formed in the injection moulded plastics layer (400) and the associated tooth (300) has been mounted on the stator back-iron (200).

2. A stator or rotor according to claim 1, wherein the circumferential support : (200) includes a plurality of protrusions (210) with each protrusion housed within a recess of a tooth (300), wherein each protrusion and recess in which it is housed are arranged to have a cavity or channel (220, 330) formed on an adjacent surface of the recess and the protrusion, wherein a material (490) is placed between the cavities or channels formed on the adjacent surfaces of the respective recesses and the protrusions for retaining the plurality of teeth to the support.

3. A stator or rotor according to claim 1 or 2, wherein the material (490) is a cured polymer, polyurethane potting material, or silicone potting material.

4. A stator or rotor according to claim 3, wherein the cured polymer is an epoxy resin.

5. A stator or rotor according to any one of the preceding claims, wherein the cavities or channels (220, 330) formed on the adjacent surfaces of the recess and the protrusion are at substantially the same radial position relative to the circumferential support.

6. A stator or rotor according to any one of the preceding claims, wherein the protrusion and the recess in which it is housed are arranged to have a cavity or channel formed on a first pair of adjacent surfaces of the recess and the protrusion and on a second pair of adjacent surfaces of the recess and the protrusion.

7. A stator or rotor according to claim 6, wherein the first pair of adjacent surfaces and the second pair of adjacent surfaces are on opposite sides of the protrusion and the recess.

8. A stator or rotor according to any one of the preceding claims, wherein the protrusion (210) extends in a radial direction away from the circumferential support (200), and/or wherein the circumferential support is formed of a series of laminations, and/or wherein the tooth (300) is formed of a series of laminations.

9. A stator or rotor according to any one of the preceding claims, wherein the circumferential support has a recess 240) on at least one side of a protrusion in which a side element of a tooth is mounted within to inhibit tangential movement of the tooth.

10. A stator or rotor according to any one of the preceding claims, wherein the protrusion and tooth extend from the circumferential support in a radial direction away from the centre point of the circumferential support, or wherein the protrusion and tooth extend from the circumferential support in a radial direction towards the centre point of the circumferential support.

11. An electric motor having a stator or rotor according to any one of the preceding claims.

12. A method of manufacturing a stator or rotor comprisinc the following steps: providing a circumferential support (200) forming a stator or rotor back-ring having a plurality of protrusions (210) that extend in a radial direction, and further extend along a direction being substantially orthogonal to the circumferential plane of the stator back-iron (200) providing a plurality of teeth, wherein each tooth includes a recess with a cavity or channel (330) formed in a surface of the recess, and a circumferential support having a plurality of protrusions circumferentially distributed about the support, wherein the plurality of protrusions have a cavity or channel (220) formed on a surface of the protrusions; over-moulding the tooth prior to receiving the coil winding, wherein the over-moulded layer is an injection moulded plastics layer (400) formed on a plurality of sides of the tooth with a first gap (410) formed in the injection moulded plastics layer on a first side of the tooth placing a first insulation element (420) in the first gap formed in the injection moulded plastics layer, wherein the injection moulded plastics layer and the first insulation element (420) are arranged to electrically insulate the tooth from the coil windings, wherein the first insulation element has a channel (460) formed on a surface of the first insulation elements for allowing the material (490) to be channeled between the cavities or channels (220, 330); placing coil windings around each of the plurality of teeth and mounting the protrusions formed on the circumferential support into a recess of a respective tooth so that the cavity or channel (330) formed in the surface of the recess and the cavity or channel (220) formed on the surface of the protrusions are on adjacent surfaces; and placing material (490) between the cavities or channels (220, 330) formed by the adjacent surfaces of the recess, wherein the material is arranged to harden after being placed in the cavities or channels (220, 330) formed by the adjacent surfaces, thereby retaining the tooth to the support.

## Patentansprüche

1. Stator oder Rotor für einen Elektromotor oder Generator, umfassend eine Umfangsstütze (200), die einen Stator- oder Rotorstützring mit einer Vielzahl von Vorsprüngen (210) bildet, die sich in einer radialen Richtung erstrecken und sich ferner entlang einer Richtung erstrecken, die im Wesentlichen orthogonal zu der Umfangsebene des Statorrückschlusses (200) ist; einen Zahn (300), der angeordnet ist, um Spulenwicklungen aufzunehmen, wobei der Zahn eine Aussparung beinhaltet, in welcher der Vorsprung (210) der Umfangsstütze untergebracht ist, wobei der Vorsprung und die Aussparung in dem Zahn angeordnet sind, um einen Hohlraum oder Kanal (220, 330) aufzuweisen, der auf einer benachbarten Oberfläche der Aussparung und des Vorsprungs gebildet ist, wenn der Vorsprung in der Aussparung untergebracht ist, und ein Material (490) innerhalb der Hohlräume oder Kanäle platziert ist, die durch die benachbarten Oberflächen der Aussparung und des Vorsprungs gebildet sind, um den Zahn an der Stütze zu halten; wobei der Zahn umspritzt wird, bevor Spulenwicklungen aufgenommen werden, wobei die umspritzte Schicht eine spritzgegossene Kunststoffschicht (400) ist, die auf einer Vielzahl von Seiten des Zahns gebildet ist, wobei ein erster Spalt (410) in der spritzgegossenen Kunststoffschicht auf einer ersten Seite des Zahns gebildet ist, wobei ein erstes Isolierelement (420) in dem ersten Spalt platziert ist, der in der spritzgegossenen Kunststoffschicht gebildet ist, wobei die spritzgegossene Kunststoffschicht und das erste Isolierelement angeordnet sind, um den Zahn elektrisch von den Spulenwicklungen zu isolieren, wobei das erste Isolierelement einen Kanal (460) aufweist, der auf einer Oberfläche der ersten Isolierelemente gebildet ist, um zu ermöglichen, dass das Material zwischen den Kanälen (220, 330) kanalisiert wird, die auf den benachbarten Oberflächen der Aussparungswandabschnitte (310) und des Vorsprungs (210) gebildet sind, wenn die Isolierelemente (420) in den Spalten platziert sind, die in der spritzgegossenen Kunststoffschicht (400) gebildet sind und der zugehörige Zahn (300) auf dem Statorrückschluss (200) montiert worden ist.

2. Stator oder Rotor nach Anspruch 1, wobei die Umfangsstütze (200) eine Vielzahl von Vorsprüngen (210) beinhaltet, wobei jeder Vorsprung innerhalb einer Aussparung eines Zahns (300) untergebracht ist, wobei jeder Vorsprung und jede Aussparung, in der er untergebracht sind, angeordnet sind, um einen Hohlraum oder einen Kanal (220, 330) aufzuweisen, der auf einer benachbarten Oberfläche der Aussparung und des Vorsprungs gebildet ist, wobei ein Material (490) zwischen den Hohlräumen oder Kanälen platziert ist, die auf den benachbarten Oberflächen der jeweiligen Aussparungen und der Vorsprünge gebildet sind, um die Vielzahl von Zähnen an der Stütze zu halten.

3. Stator oder Rotor nach Anspruch 1 oder 2, wobei das Material (490) ein gehärtetes Polymer, Polyurethan-Vergussmaterial oder Silikon-Vergussmaterial ist.

4. Stator oder Rotor nach Anspruch 3, wobei das gehärtete Polymer ein Epoxidharz ist.

5. Stator oder Rotor nach einem der vorhergehenden Ansprüche, wobei die Hohlräume oder Kanäle (220, 330), die auf den benachbarten Oberflächen der Aussparung und des Vorsprungs gebildet sind, im Wesentlichen an der gleichen radialen Position relativ zu der Umfangsstütze sind.

6. Stator oder Rotor nach einem der vorhergehenden Ansprüche, wobei der Vorsprung und die Aussparung, in der er untergebracht ist, angeordnet sind, um einen Hohlraum oder einen Kanal aufzuweisen, der auf einem ersten Paar benachbarter Oberflächen der Aussparung und des Vorsprungs und auf einem zweiten Paar benachbarter Oberflächen der Aussparung und des Vorsprungs gebildet ist.

7. Stator oder Rotor nach Anspruch 6, wobei das erste Paar benachbarter Oberflächen und das zweite Paar benachbarter Oberflächen auf gegenüberliegenden Seiten des Vorsprungs und der Aussparung sind.

8. Stator oder Rotor nach einem der vorhergehenden Ansprüche, wobei sich der Vorsprung (210) in einer radialen Richtung weg von der Umfangsstütze (200) erstreckt und/oder wobei die Umfangsstütze aus einer Reihe von Laminierungen gebildet ist und/oder oder wobei der Zahn (300) aus einer Reihe von Laminierungen gebildet ist.

9. Stator oder Rotor nach einem der vorhergehenden Ansprüche, wobei die Umfangsstütze eine Aussparung (240) auf zumindest einer Seite eines Vorsprungs aufweist, in der ein Seitenelement eines Zahns darin montiert ist, um tangentiale Bewegung des Zahns zu verhindern.

10. Stator oder Rotor nach einem der vorhergehenden Ansprüche, wobei sich der Vorsprung und der Zahn von der Umfangsstütze in einer radialen Richtung weg von dem Mittelpunkt der Umfangsstütze erstrecken, oder wobei sich der Vorsprung und der Zahn von der Umfangsstütze in einer radialen Richtung zu dem Mittelpunkt der Umfangsstütze erstrecken.

11. Elektromotor, der einen Stator oder Rotor nach einem der vorhergehenden Ansprüche aufweist.

12. Verfahren zum Herstellen eines Stators oder Rotors, umfassend die folgenden Schritte: Bereitstellen einer Umfangsstütze (200), die einen Stator- oder Rotorstützring bildet, der eine Vielzahl von Vorsprüngen (210) aufweist, die sich in einer radialen Richtung erstrecken, und sich ferner entlang einer Richtung erstrecken, die im Wesentlichen orthogonal zu der Umfangsebene des Statorrückschlusses (200) ist, Bereitstellen einer Vielzahl von Zähnen, wobei jeder Zahn eine Aussparung mit einem Hohlraum oder Kanal (330) beinhaltet, der in einer Oberfläche der Aussparung gebildet ist, und eine Umfangsstütze, die eine Vielzahl von Vorsprüngen aufweist, die umlaufend um die Stütze verteilt ist, wobei die Vielzahl von Vorsprüngen einen Hohlraum oder Kanal (220) aufweisen, der auf einer Oberfläche der Vorsprünge gebildet ist;
Umspritzen des Zahns vor dem Aufnehmen der Spulenwicklung, wobei die umspritzte Schicht eine spritzgegossene Kunststoffschicht (400) ist, die auf eine Vielzahl von Seiten des Zahns gebildet ist, wobei ein erster Spalt (410) in der spritzgegossenen Kunststoffschicht auf einer ersten Seite des Zahns gebildet ist;
Platzieren eines ersten Isolierelements (420) in dem ersten Spalt, der in der spritzgegossenen Kunststoffschicht gebildet ist, wobei die spritzgegossene Kunststoffschicht und das erste Isolierelement (420) angeordnet sind, um den Zahn elektrisch von den Spulenwicklungen zu isolieren, wobei das erste Isolierelement einen Kanal (460) aufweist, der auf einer Oberfläche der ersten Isolierelemente gebildet ist, um zu ermöglichen, dass das Material (490) zwischen den Hohlräumen oder Kanälen (220, 330) kanalisiert wird;
Platzieren von Spulenwicklungen um jeden aus der Vielzahl von Zähnen und Montieren der Vorsprünge, die an der Umfangsstütze gebildet sind, in einer Aussparung eines jeweiligen Zahns, sodass der Hohlraum oder Kanal (330), der in der Oberfläche der Aussparung gebildet ist und der Hohlraum oder Kanal (220), der in der Oberfläche der Vorsprünge gebildet ist, auf benachbarten Oberflächen sind; und Platzieren von Material (490) zwischen den Hohlräumen oder Kanälen (220, 330), die durch die benachbarten Oberflächen der Aussparung gebildet sind, wobei das Material angeordnet ist, um auszuhärten, nachdem es in den Hohlräumen oder Kanälen (220, 330) platziert wurde, die durch die benachbarten Oberflächen gebildet werden, wodurch der Zahn an der Stütze gehalten wird.

## Revendications

1. Stator ou rotor pour un moteur ou un générateur électriques comprenant un support circonférentiel (200) formant une contre-bague de stator ou de rotor possédant une pluralité de protubérances (210) qui s'étendent dans une direction radiale, et s'étendent en outre le long d'une direction qui est sensiblement orthogonale au plan circonférentiel du contre-fer de stator (200) ; une dent (300) agencée pour recevoir des enroulements de bobine, ladite dent comprenant un évidement dans lequel est logée la protubérance (210) du support circonférentiel,
ladite protubérance et ledit évidement dans la dent étant agencés pour posséder une cavité ou un canal (220, 330) formé sur une surface adjacente de l'évidement et de la protubérance lorsque la protubérance est logée dans l'évidement, et un matériau (490) étant placé à l'intérieur des cavités ou canaux formés par les surfaces adjacentes de l'évidement et de la protubérance pour retenir la dent au support ; ladite dent étant surmoulée avant de recevoir des enroulements de bobine, ladite couche surmoulée étant une couche de plastique moulée par injection (400) formée sur une pluralité de côtés de la dent avec un premier espace (410) formé dans la couche de plastique moulée par injection sur un premier côté de la dent avec un premier élément d'isolation (420) placé dans le premier espace formé dans la couche de plastique moulée par injection, ladite couche de plastique moulée par injection et ledit premier élément d'isolation étant agencés pour isoler électriquement la dent des enroulements de bobine, ledit premier élément d'isolation possédant un canal (460) formé sur une surface des premiers éléments d'isolation pour permettre au matériau d'être canalisé entre les canaux (220, 330) formés sur les surfaces adjacentes des sections de paroi d'évidement (310) et la protubérance (210) lorsque les éléments d'isolation (420) sont placés dans les espaces formés dans la couche de plastique moulée par injection (400) et ladite dent associée (300) ayant été montée sur le contre-fer de stator (200).

2. Stator ou rotor selon la revendication 1, ledit support circonférentiel (200) comprenant une pluralité de protubérances (210) avec chaque protubérance logée dans un évidement d'une dent (300),
chaque protubérance et évidement dans lequel elle est logée étant agencés pour posséder une cavité ou un canal (220, 330) formé sur une surface adjacente de l'évidement et de la protubérance, un matériau (490) étant placé entre les cavités ou canaux formés sur les surfaces adjacentes des évidements respectifs et les protubérances pour retenir la pluralité de dents sur le support.

3. Stator ou rotor selon la revendication 1 ou 2, ledit matériau (490) étant un polymère durci, un matériau d'enrobage en polyuréthane ou un matériau d'enrobage en silicone.

4. Stator ou rotor selon la revendication 3, ledit polymère durci étant une résine époxy.

5. Stator ou rotor selon l'une quelconque des revendications précédentes, lesdites cavités ou canaux (220, 330) formés sur les surfaces adjacentes de l'évidement et de la protubérance étant sensiblement au niveau de la même position radiale par rapport au support circonférentiel.

6. Stator ou rotor selon l'une quelconque des revendications précédentes, ladite protubérance et ledit évidement dans lequel elle est logée étant agencés pour posséder une cavité ou un canal formé sur une première paire de surfaces adjacentes de l'évidement et de la protubérance et sur une seconde paire de surfaces adjacentes de l'évidement et de la protubérance.

7. Stator ou rotor selon la revendication 6, ladite première paire de surfaces adjacentes et ladite seconde paire de surfaces adjacentes étant sur des côtés opposés de la protubérance et de l'évidement.

8. Stator ou rotor selon l'une quelconque des revendications précédentes, ladite protubérance (210) s'étendant dans une direction radiale en s'éloignant du support circonférentiel (200), et/ou ledit support circonférentiel étant formé d'une série de stratifications, et/ou ladite dent (300) étant formée d'une série de stratifications.

9. Stator ou rotor selon l'une quelconque des revendications précédentes, ledit support circonférentiel possédant un évidement (240) sur au moins un côté d'une protubérance dans laquelle un élément latéral d'une dent est monté à l'intérieur pour empêcher le mouvement tangentiel de la dent.

10. Stator ou rotor selon l'une quelconque des revendications précédentes, ladite protubérance et ladite dent s'étendant à partir du support circonférentiel dans une direction radiale en s'éloignant du point central du support circonférentiel, ou ladite protubérance et ladite dent s'étendant à partir du support circonférentiel dans une direction radiale vers le point central du support circonférentiel.

11. Moteur électrique possédant un stator ou un rotor selon l'une quelconque des revendications précédentes.

12. Procédé de fabrication d'un stator ou d'un rotor comprenant les étapes suivantes : fourniture d'un support circonférentiel (200) formant une contre-bague de stator ou de rotor possédant une pluralité de protubérances (210) qui s'étendent dans une direction radiale, et s'étendent en outre le long d'une direction qui est sensiblement orthogonale au plan circonférentiel du contre-fer de stator (200) fournissant une pluralité de dents, chaque dent comprenant un évidement avec une cavité ou un canal (330) formé dans une surface de l'évidement, et un support circonférentiel possédant une pluralité de protubérances distribuées circonférentiellement autour du support, ladite pluralité de protubérances possédant une cavité ou un canal (220) formé sur une surface des protubérances ;
surmoulage de la dent avant de recevoir l'enroulement de bobine, ladite couche surmoulée étant une couche de plastique moulée par injection (400) formée sur une pluralité de côtés de la dent avec un premier espace (410) formé dans la couche de plastique moulée par injection sur un premier côté de la dent
la mise en place d'un premier élément d'isolation (420) dans le premier espace formé dans la couche de plastique moulée par injection, ladite couche de plastique moulée par injection et ledit premier élément d'isolation (420) étant agencés pour isoler électriquement la dent des enroulements de bobine, ledit premier élément d'isolation l'élément possédant un canal (460) formé sur une surface des premiers éléments d'isolation pour permettre au matériau (490) d'être canalisé entre les cavités ou canaux (220, 330) ; la mise en place des enroulements de bobine autour de chacune de la pluralité de dents et le montage des protubérances formées sur le support circonférentiel dans un évidement d'une dent respective afin que la cavité ou le canal (330) formé dans la surface de l'évidement et la cavité ou le canal (220) formé sur la surface des protubérances se trouvent sur des surfaces adjacentes ; et la mise en place d'un matériau (490) entre les cavités ou canaux (220, 330) formés par les surfaces adjacentes de l'évidement,
ledit matériau étant agencé pour durcir après avoir été placé dans les cavités ou canaux (220, 330) formés par les surfaces adjacentes, retenant ainsi la dent au support.
